# EUROPÄISCHE PATENTSCHRIFT

(11) **EP 0 795 438 B1**
(45) Veröffentlichungstag und Bekanntmachung des Hinweises auf die Patenterteilung: **12.07.2000**
(21) Anmeldenummer: 97104091.0
(22) Anmeldetag: 11.03.1997
(51) Int. Cl.: B60R 13/10

(54) **Kennzeichnungsträger und Verfahren zu seiner Herstellung**
Identificationcarrier and processes for producing it
Support d'immatriculation et procédés pour sa réalisation

(30) Priorität: 12.03.1996 DE 19609662
(43) Veröffentlichungstag der Anmeldung: 17.09.1997
(73) Patentinhaber: Herbst, Gustav, 81608 München (DE)
(72) Erfinder: Herbst, Gustav, 81608 München (DE); Binder, Alfons, 81827 München (DE)
(74) Vertreter: Fischer, Matthias, Dipl.-Ing.

(56) Entgegenhaltungen:
- EP-A- 0 576 942
- EP-A- 0 608 078
- WO-A-88/01080
- WO-A-94/20335
- US-A- 5 202 677

## Beschreibung

Die vorliegende Erfindung betrifft einen Kennzeichnungsträger entsprechend dem Oberbegriff des Anspruchs 1 und Verfahren zu seiner Herstellung. Ein den gattungsgemäßen Oberbegriff bildender Kennzeichnungsträger ist beispielsweise aus der EP-A-0 581 030 bekannt. In der DE-A-28 31 587 sind ebenso einige bereits bekannte Merkmale offenbart.

Kennzeichnungsträger sind vor allem Kennzeichnungsschilder für Kraftfahrzeuge oder Zulassungs- oder Prüfplaketten für Kraftfahrzeuge, ganz allgemein aber auch andere Schilder, und Plaketten oder im Innenbereich Dokumente, wie z.B. Urkunden, amtliche Papiere wie Kfz-Zulassungsscheine, Führerscheine und dergl., die fälschungssicher und nach mißbräuchlichem Ablösen nicht wiederverwendbar ausgebildet sein sollen.

Ein solcher Kennzeichnungsträger, der durch die Farbschicht als Ganzes einen bestimmten Farbton (auch weiß) zeigt, wird mittels einer Kleberschicht (nach dem Abziehen einer zuvor auf dieser angebrachten Schutzschicht, insbesondere eines Schutzpapiers) auf eine Unterlage, insbesondere auf ein Kennzeichenschild oder von innen auf die Scheibe eines Kraftfahrzeugs oder auf eine amtliches Dokument aufgeklebt. Bei einem Versuch, den Kennzeichnungsträger von dieser Unterlage wieder abzulösen, z.B. mittels einer zwischen Trägerfolie und Unterlage im Bereich der Kleberschicht eingeführten, insbesondere angewärmten Klinge oder Schneide löst sich die Trägerfolie (ggf. unter Zerlegung in einzelne Segmente, sofern die Trägerfolie segmentiert ist) von der Kleberschicht ab, wobei mit der Kleberschicht wesentliche Teile des Kennzeichnungsaufdrucks an der Unterlage verbleiben. Der Kennzeichnungsaufdruck wird also zerstört oder mindestens verzerrt oder verformt, so daß das ursprüngliche Bild des Kennzeichnungsaufdrucks nicht wieder herstellbar ist und den Fälschungsversuch erkennbar macht.

Zusätzlich zu dem Kennzeichnungsaufdruck ist ein Raster zwischen dem Kennzeichnungsträger und der Kleberschicht vorgesehen. Durch diesen Raster wurde die Fälschungssicherheit bereits verbessert.

Wenn neben einem mechanischen Angriff zum Ablösen des Kennzeichnungsträgers auch einfache Lösungsmittel eingesetzt werden, wird der Kennzeichnungsaufdruck durch solche Lösungsmittel zusätzlich angegriffen und zerstört.

Der Kennzeichnungsträger aus der EP-0 581 030, der aus einer Trägerfolie besteht, auf die ein Kennzeichnungsaufdruck, ein Raster und eine Farbschicht aufgedruckt sind, weist eine diese Schichten abdeckende Kleberschicht auf, wobei die Farbschicht in einem zu dem Raster komplementären Muster unterbrochen ist. Die zwischen den Unterbrechungen vorhandenen Farbbereiche des Rasters überdecken die Unterbrechungen der Farbschicht bzw. überdecken umgekehrt die Farbbereiche der Farbschicht, die Unterbrechungen des Rasters. Damit ist nicht mehr eine geschlossene durchgehende Farbschicht vorhanden, längs derer die Trägerfolie mit dem Kennzeichnungsdruck ggf. unzerstört von der Unterlage abgelöst werden könnte. Durch die Unterbrechungen in der Farbschicht ist sichergestellt, daß diese selbst einerseits beim Ablöseversuch zerstört wird und andererseits Teile des Kennzeichenaufdrucks, die durch die Unterbrechungen der Farbschicht hindurch mit dem Raster oder der Kleberschicht in Verbindung stehen beim Ablöseversuch an dem Raster oder an der Kleberschicht haften bleiben. Der Kennzeichnungsaufdruck wird also beim Ablöseversuch mit Sicherheit zerstört, so daß der Kennzeichnungsträger nicht mehr wieder herstellbar und nicht mißbräuchlich verwendbar ist.

Die genannten Kennzeichenträger haben nun einen gemeinsamen Nachteil, daß ihre Echtheit nur durch oder bei Zerstörung der Kennzeichnungsträger selbst festgestellt werden kann. Ein (Routine-) Überprüfen eines ebenso fälschungssicheren Kennzeichnungsträgers ohne irgendeine Zerstörung, unauffällig und ohne besondere Vorrichtungen ist jedoch nicht möglich. Dies wird jedoch aus allgemein verständlichen Gründen immer wichtiger, da Fälschungen von Kennzeichnungsträgern, sei es in amtlichen Papieren (z. B. Stempel oder Siegelmarken in Ausweisen oder dergl.) oder in/auf Eichmarken oder auch an/auf Fahrzeugkennzeichen usw. ständig zunehmen.

Die EP-A- 0 608 078 beschreibt eine thermochrome Beschichtung eines Sicherheitsstreifens, der in vor Fälschung zu schützenden Gegenständen wie Banknoten, Schecks oder anderen Kennzeichnungsträgern Verwendung findet.

Es ist die Aufgabe der Erfindung, einen gegen Fälschungsversuche besonders empfindlichen Kennzeichnungsträger zu schaffen, der zerstörungsfrei auf Echtheit überprüft werden kann.

Die Aufgabe wird erfindungsgemäß mit einem Kennzeichnungsträger gemäß Anspruch 1 gelöst. Damit wird ein fälschungssicherer Kennzeichnungsträger vorgeschlagen, der folgende übereinanderliegenden Schichten aufweist: eine Klarlackschicht, eine Farbschlicht, gleichmäßig aufgetragene, Pigmentkapseln einer thermochromen Farbe enthaltende, Klebstoffschicht und eine entweder vor der Klarlackschicht oder nach der letztgenannten Klebstoffschicht angeordnete Trägerschicht. Hierdurch ergibt sich eine möglichst einfach strukturierte Abfolge der Schichten für einen simplen, aber doch wirkungsvollen Kennzeichnungsträger. Pigmentkapseln einer thermochromen Farbe werden vor dem Aufdrucken der Klebstoffschicht dieser zugemischt und mit dieser gleichmäßig verteilt und durch diese selbst geschützt auf die Trägerschicht aufgebracht. Damit ist der Kennzeichnungsträger zu beiden Außenflächen hin geschützt. Der Kennzeichnungsaufdruck ist Teil der Farbschicht, die von der Klarlackschicht und der Klebstoffschicht nach außen hin isoliert und damit geschützt ist. Trotz des Einschlusses der Pigmentkapseln einer thermochromen Farbe sind diese problemlos durch Wärmeeinfluß zum Farbumschlag erregbar.

Für den Fall, daß der Kennzeichnungsaufdruck immer, also temperaturunabhängig erkennbar bzw. lesbar sein soll, z. B. bei Verwendung des erfindungsgemäßen Kennzeichnungsträgers in schlecht vorherbestimmbaren Temperaturbereichen, ist es zweckmäßig, einen, in wenigstens einer der temperaturunabhängigen Farbschichten angeordneten, Kennzeichnungsaufdruck vorzusehen und eine oder mehrere, thermochrome Farbe enthaltende, Schicht(en) zusätzlich anzuordnen, die für die oben bereits beschriebene Echtheitsprüfung des Kennzeichnungsträgers zuständig ist (sind).

Eine vorteilhafte Weiterbildung der Erfindung besteht darin, daß der Kennzeichnungsträger mindestens eine, thermochrome, also sich unter dem Einfluß der Temperatur verändernde Farbe, enthaltende Schicht aufweist. Dadurch ergibt sich der Vorteil, daß sich aufgrund einer Veränderung der Umgebungstemperatur um den Kennzeichnungsträger herum die Farbe des Kennzeichungsträgers verändert. Dies kann beispielsweise mit irgendeinem wärmeabgebenden Gegenstand, wie einer Heizung oder auch nur aufgrund der Wärme einer kurz auf den Kennzeichnungsträger aufgelegten Hand erreicht werden.

In einer vorteilhaften Weiterbildung der Erfindung wird der Umschlagspunkt der thermochromen Farbe auf einen vorbestimmten Temperaturbereich festgelegt. Hierbei wird für die entsprechende Schicht des Kennzeichnungsträgers eine thermochrome Farbe gewählt, die in dem Temperaturbereich, in dem sich der Kennzeichnungsträger üblicherweise befindet, farblos wirkt. Damit wird die Schicht thermochromer Farbe "versteckt". Ist nun eine Überprüfung des Vorhandenseins einer derartigen Schicht gewünscht, d.h. will man überprüfen, ob der Kennzeichnungsträger echt ist, so kann das hier für die gewählte thermochrome Farbe bzw. deren Umschlagspunkt notwendige Temperatur mittels einer geeigneten Heizung erreicht werden und damit die Echtheit bestätigt oder widerlegt werden, da bei der genannten Temperatur die "versteckte" sichtbar wird. Wird die Heizung wieder entfernt, so schlägt die thermochrome Farbe wieder um und nimmt ihre voreingestellte Farbe, beispielsweise durchsichtig, wieder an. Der Umschlagspunkt bzw. die thermochrome Farbe kann auch so eingestellt werden, daß bei Erhöhung der Temperatur der Umschlag von sichtbar auf unsichtbar verläuft.

Eine weitere vorteilhafte Ausgestaltung der Erfindung besteht darin, daß für den Fall, daß ein sehr großer Temperaturbereich gewünscht wird, in dem der Kennzeichnungträger überprüfbar sein soll, eine weitere Schicht einer thermochromen Farbe auf dem Kennzeichnungsträger angeordnet ist. Es kann dann z.B. über große Temperaturbereiche hinweg der Effekt einer Über- oder Nebeneinanderschichtung mehrerer thermochromer Farben und mit entsprechend mehreren verschiedenen Umschlagspunkten ausgenützt werden. Dies ist beispielsweise mit Auswahl verschiedener Temperaturumschlagspunkte möglich, die je nach Anforderung ausgewählt werden. Handelt es sich beispielsweise bei den Kennzeichnungsträgern um solche, die auf Ausweispapieren oder dergleichen aufgebracht werden, die in der Regel bei Zimmertemperatur (etwa 20° C) zum Einsatz kommmen, so kann man einen Umschlagspunkt bei etwa 35° C auswählen. Dies hat den Vorteil, daß man durch einfachen Daumendruck auf dem Kennzeichnungsträger aufgrund der menschlichen Körperwärme sehr schnell den Umschlagspunkt der thermochromen Farbe erreicht und ablesen kann, ob die thermochrome Farbschicht "verschwindet" oder nicht. Der Kennzeichnungsträger nach Anspruch 5 ist beispielsweise so geartet, daß bei -5 °C Umgebungstemperatur die thermochrome Farbe sichtbar ist und bei +10 °C "verschwindet". Dies hat den Vorteil, daß bei der Temperatur von -5 °C nicht soviel Heizenergie aufgebracht werden muß, wie um auf etwa 35 °C zu kommen, um die thermochrome Farbe "verschwinden" zu lassen und damit als echt zu erkennen.

In einer vorteilhaften Ausgestaltung der Erfindung besteht der Kennzeichnungsaufdruck des Kennzeichnungsträgers selbst aus einer Schicht einer thermochromen Farbe, d. h. der Kennzeichnungsaufdruck wurde mit thermochromer Farbe gedruckt. Dadurch ergibt sich der Vorteil, daß sich aufgrund einer Veränderung der Umgebungstemperatur um den Kennzeichnungsträger herum die Farbe des Kennzeichungsaufdruckes verändert. Hierbei kann vorteilhafterweise z. B. für den Kennzeichnungsaufdruck des Kennzeichnungsträgers eine thermochrome Farbe gewählt werden, die in dem Temperaturbereich, in dem sich der Kennzeichnungsträger üblicherweise befindet, farblos wirkt. Damit wird der Kennzeichnungsaufdruck "versteckt". Ist nun eine Überprüfung auf Vorhandensein eines derartigen Kennzeichnungsaufdruckes gewünscht, kann dies, wie oben schon beschrieben, mittels einer geeigneten Heizung erreicht und damit die Echtheit des Kennzeichnungsträgers bestätigt oder widerlegt werden, da bei der genannten Temperatur der "versteckte" Kennzeichnungsaufdruck sichtbar wird. Das umgekehrte Prinzip ist (s. o.) ebenfalls möglich.

Eine vorteilhafte Weiterbildung der Erfindung besteht darin, daß der Kennzeichnungsträger folgende übereinanderliegende Schichten aufweist: eine Klarlackschicht, eine Schicht einer auf Licht reagierenden Farbe, eine Trennlackschicht, eine Klarlackschicht, eine Farbschicht, eine weitere Farbschicht, eine bereichsweise aufgetragene Schicht einer thermochromen Farbe, eine gleichmäßig aufgetragene, thermochrome Farbe enthaltende Schicht, eine entweder vor der ersten Klarlackschicht oder nach der letztgenannten, gleichmäßig aufgetragene thermochrome Farbe enthaltenden, Schicht angeordnete Trägerschicht. Ein derartig geschichteter Kennzeichnungsträger hat sich in der Praxis als absolut fälschungssicher und doch kostengünstig und einfach herstellbar erwiesen. Zur einfachen Schichtabfolge des zuvor beschriebenen Kennzeichnungsträgers, der eine Klarlackschicht, eine Farbschicht sowie eine gleichmäßig aufgetragene Pigmentkapsel einer thermochromen Farbe enthaltene Klebstoffschicht enthielt, die auf einer Trägerschicht angeordnet ist, sind hier weitere Schichten davor oder dazwischen angeordnet dazugekommen, um den Kennzeichnungsträger mit vorteilhaften Zusatzfunktionen zu versehen. Eine neben der erstgenannten Klarlackschicht angeordnete Trennlackschicht kann als Haftsperrschicht, die ein Aneinanderhaften der Schichten in lokalen Bereichen verhindert, vorgesehen werden. Ein Abheben der über der Trennlackschicht angeordneten Schicht führt in Teilbereichen nicht zum Abheben der unteren Schicht, in diesem Fall der Klarlackschicht, also beim unbefugten Entfernen des Kennzeichnungsträgers zwangsläufig zu dessen Zerstörung. Diese Trennlackschicht kann auch mit UV-Licht empfindlichen Farbpigmenten versehen sein, so daß in vorteilhafter Weise durch Kontrolle mit einer entsprechenden UV-Lampe das Vorhandensein dieser Trennlackschicht zusätzlich geprüft werden kann. Als Zusatzfunktionsschicht, deren Vorhandensein mit einer Schwarzlichtlampe geprüft werden kann, ist eine Schicht mit einer auf Licht reagierenden Farbe vorgesehen, die wiederum von einer den gesamten Kennzeichnungsträger nach außen hin versiegelnden Klarlackschicht abgedeckt wird. Bei diesem Ausführungsbeispiel eines Kennzeichnungsträgers sind zwei Farbschichten vorgesehen, die vorzugsweise aus unter UV-Licht härtender Druckfarbe bestehen, wobei die eine Farbschicht zweckmäßigerweise einen Text, nämlich den Kennzeichnungsaufdruck darstellt und eine weitere Farbschicht, die nicht unbedingt vorhanden sein muß, als ein darunter liegender Rasteraufdruck ausgebildet sein kann, wobei die hierfür verwendete Farbe zu einer Oberfläche hin nicht haftend gestaltet sein kann. Zweck der letztbeschriebenen Ausbildung ist eine zusätzliche schon oben genauer beschriebene Trenn-funktion. Verwendung dieser z. B. als Raster ausgebildeten weiteren Farbschicht erhöht außerdem die Fälschungssicherheit. Die vorzugsweise nur bereichsweise aufgetragene Schicht einer thermochromen Farbe (Merkmal g des Anspruchs 8) hat eine oben bereits beschriebene Sicherheits- und Kontrollfunktion, die durch Einwirkung von Wärme oder Kälte in Betrieb genommen werden kann und auch eine zusätzliche Sicherheitsfunktion darstellt, insofern, als durch bestimmte Auswahl mit einer derartigen Farbe bedruckten Bereiche eine zusätzliche Zeichenfunktion bekommen können. Die benachbarte, Pigmentkapseln einer thermochromen Farbe enthaltene Klebstoffschicht ist demgegenüber gleichmäßig aufgetragen und hat die gleiche Funktion wie beim zuvor beschriebenen Ausführungsbeispiel. Dasselbe betrifft die Trägerschicht, die beim vorliegenden Ausführungsbeispiel entweder der äußersten Klarlackschicht oder der Klebstoffschicht benachbart angeordnet ist. Vorzugsweise ist die Klebstoffschicht eine Dispersionshaftklebstoffschicht auf Wasserbasis. Die Trägerschicht, das ist die für das Handling und den Transport des erfindungsgemäßen Kennzeichnungsträgers vorgesehene Schicht, besteht aus einem Trägerpapier oder dergl., das mit einem Trennmittel versehen ist, so daß sich der Kennzeichnungsträger zur Anwendung leicht von der Trägerschicht lösen läßt. Vorzugsweise ist die Trägerschicht mit Silicon beschichtet, wobei bei Herstellung der Kennzeichnungsträger auf Trägerschichtrollen beide Seiten der Trägerschicht mit Silicon versehen sind. Die von der Trägerschicht wegzeigende Seite des Kennzeichnungsträgers ist hierbei stärker silikonisiert als die zur Trägerschicht hinzeigende, so daß sich der Kennzeichnungsträger beim Abwickeln der Trägerschicht von der dem Kennzeichnungsträger abgewandten Seite leichter löst.

Die Aufgabe wird auch gelöst durch die Verfahren gemäß den Ansprüchen 12-14 zur Herstellung der beanspruchten Kennzeichnungsträger. Es hat sich insbesondere als vorteilhaft erwiesen, die Kennzeichnungsträger in nacheinander folgenden Schichten zu drucken, wobei als erste Schicht eine gleichmäßig aufgetragene, Pigmentkapseln einer thermochromen Farbe enthaltene Klebstoffschicht gedruckt wird, und die weiteren Schichten entsprechend ihrer in den Ansprüchen aufgelisteten Reihenfolge gedruckt werden. Dadurch ergibt sich in vorteilhafter Weise ein äußerst rationelles Herstellungsverfahren der erfindungsgemäßen Kennzeichnungsträger.

Eine hier einsetzbare thermochrome Farbe ist beispielsweise unter den Handelsnamen LICRI-THERM erhältlich. Sie ist eine Druckfarbe, die aus thermochromen Mikrokapseln in einem wässrigen Bindemittelsystem besteht. Die Mikrokapseln reflektieren ein schmales Band des einfallenden Lichtes. Die Farbe verändert sich je nach Temperatur von Transparent bis beispielsweise nach Rot anschließend über die Farben des Spektrums hin bis zu Blau, Violett und bei weiter steigender Temperatur schließlich wieder zu Transparent. Hierbei kann man durch Erwärmung und/oder Abkühlung einen spezifisch wählbaren Farbtonumschlag vorbestimmen. Die Farbtonumschläge liegen hierbei etwa innerhalb der Temperaturspanne zwischen -10° und +70° Celsius. Die Farbtonumschläge können von einer bestimmten Farbe zu Farblos oder von einer bestimmten Farbe zu einer anderen Farbe gewählt werden. Es kann hierbei aus einer ausgewählten Palette in bestimmten Nuancen Gelb, Orange, Rot, Rosa, Violett, Blau, Grün, Schwarz, Grau und Braun ausgewählt werden. Der thermochrome Umschlag ist wahlweise reversibel oder nicht reversibel. Soll das Ergebnis der Überprüfung eines echten Kennzeichnungsträgers unauffällig durchgeführt werden, so muß natürlich ein reversibler thermochromer Umschlag gewählt werden. Es ist jedoch für besondere Anwendungszwecke, bei denen es beispielsweise um eine einmalige Überprüfung geht oder auch um eine gewünschte Markierung aufgrund einer Überprüfung denkbar, daß hierzu ein nicht reversibler thermochromer Farbtonumschlag angestrebt wird. Thermochrome Farben sind problemlos auf nahezu alle Materialien druckbar. Je dünner die aufgetragene Farbschicht ist, desto schneller reagiert im allgemeinen die thermochrome Farbe auf einen Temperaturwechsel.

Vorteilhafte Weiterbildungen der Erfindung sind den Unteransprüchen zu entnehmen.

Der fälschungssichere Kennzeichnungsträger gemäß der Erfindung kann in vorteilhafter Weise sowohl bei den in der Beschreibungseinleitung genannten Kennzeichnungsträgern für Kraftfahrzeuge eingesetzt werden, als auch für Stempelmarken, Siegelmarken, Eichmarken und sonstige stempelartigen und ähnlichen Aufdrucke verwendet werden, die auf beliebige Unterlagen wie Metall, Kunststoff, Holz, Papier usw. aufgebracht werden.

Unter einer Trägerschicht ist ganz allgemein eine Schicht zu verstehen, die Unterlage für einen Kennzeichnungsaufdruck sein kann. Dazu dienen beispielsweise Folien oder auch beispielsweise gedruckte Farben, die film- oder schichtartig auf einer Unterlage aufgebracht werden.

Unter Farben sind auch Farben zu verstehen, die für das menschliche Auge weiß, farblos oder transparent erscheinen.

Ein Ausführungsbeispiel der Erfindung wird im folgenden anhand eines schematischen Querschnitts in Fig 4 beschrieben; die Figuren 1-3 dienen der weiteren Erläuterung der Erfindung:
- Fig. 1: zeigt in stark vergrößertem Maßstab im Querschnitt eine Prinzipskizze eines Abschnitts eines Kennzeichnungsträgers.
- Fig. 2: zeigt in stark vergrößertem Maßstab im Querschnitt einen Abschnitt eines Kennzeichnungsträgers, wie er beispielsweise für ein Kraftfahrzeug verwendet wird.
- Fig. 3: zeigt einen noch weiter vergrößerten Ausschnitt aus Fig. 2
- Fig. 4: zeigt einen Kennzeichnungsträger gemäß der Erfindung schematisch im Schnitt.

Zur Verdeutlichung des Aufbaus sind die Dicken der dargestellten Schichten und auch deren Abstände voneinander stark übertrieben gezeichnet, wobei die Dickenverhältnisse der Schichten nicht maßstäblich sind.

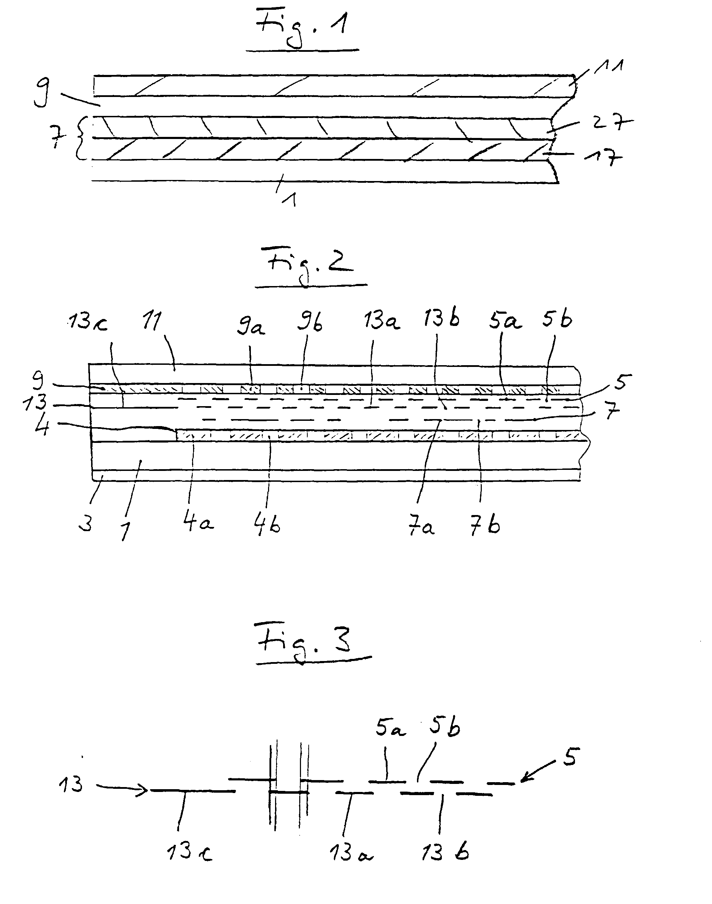

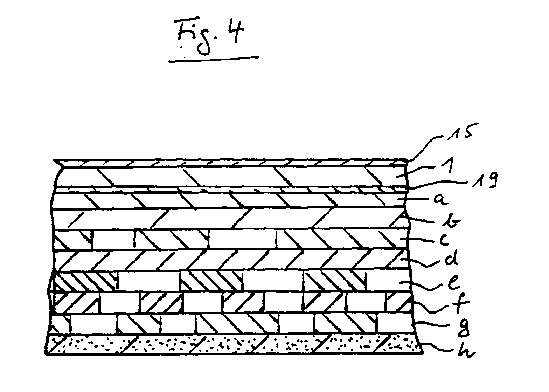

Der in Fig. 1 dargestellte Kennzeichnungsträger besteht aus einer Trägerschicht 1, auf die ein Kennzeichnungsaufdruck 7 aufgedruckt ist. Dies ist in Fig. 1 so dargestellt, daß der Kennzeichnungsaufdruck 7 aus zwei Schichten 17 und 27 besteht. Es kann jedoch auch nur eine Schicht, beispielsweise die Schicht 17 oder auch mehr als die beiden dargestellten Schichten eingesetzt werden. Abhängig von dem geforderten Temperaturspektrum, in dem der Kennzeichnungsträger eingesetzt werden soll, wird die Anzahl der benötigten Schichten verschieden eingestellter thermochromer Farben bestimmt. Über der Schicht des Kennzeichnungsaufdruckes wird eine Kleberschicht 9 aufgebracht, mittels der der Kennzeichungsträger auf einer Unterlage 11 angebracht werden kann. Man kann die hier als Unterlage 11 bezeichnete Schicht auch als eine Hilfsunterlage (z.B. Siliconpapier) ansehen, auf der der Kennzeichungsträger vor Anbringung an seiner letztbestimmten Stelle zwischengelagert und transportiert wird. Selbstverständlich können die Positionen der Schichten 7 und 1 auch vertauscht angeordnet werden, d.h. der Kennzeichnungsaufdruck 7 kann auch an der der Kleberschicht 9 gegenüberliegenden Seite der Trägerschicht 1 angebracht werden. Der eben beschriebene Kennzeichnungsträger kann auf unterschiedlichsten Untergründen angebracht werden. Er ist in vorteilhafter Weise für die Verwendung in sämtlichen Papieren und Unterlagen einsetzbar, in denen schützenswerte Markierungen oder Angaben angebracht werden sollen. Dies kann ein Führerschein, ein Kraftfahrzeugschein, ein Paß, ein Personalausweis oder sonst eine Eichmarke in irgendeiner ähnlichen Unterlage sein.

Die Figur 2 zeigt eine spezielle Anwendung des Kennzeichungsträgers, wie er beispielsweise für TÜV- oder Abgasuntersuchungsplaketten für KFZ-Kennzeichen eingesetzt werden kann.

Der Kennzeichnungsträger nach Fig. 2 besteht aus einer Trägerschicht 1, die in einzelne Segmente unterteilt sein kann, aber nicht sein muß. An der Unterseite oder Rückseite trägt die Trägerschicht 1 ggf. eine Halteschicht 3, die zum Zusammenhalt der Segmente dient, und die, sofern erforderlich, nach dem Aufkleben der Trägerschicht 1 bzw. des Kennzeichnungsträgers auf eine Unterlage von dem Kennzeichnungsträger abgezogen werden kann. Die Halteschicht 3 kann demgemäß aus Papier- oder Kunststoff-Folie bestehen. Soll sie nicht abziehbar sein, kann hierfür auch eine Lackschicht (farblos oder eingefärbt) verwendet werden.

Auf die Trägerschicht 1 ist zunächst eine Schicht eines Trennlacks 4 aufgedruckt, der das Ablösen der Schicht 1 von den im folgenden zu beschreibenden Schichten und von einer Kleberschicht 9 erleichtert. Die Trennschicht 4 kann aus Klarlack oder ähnlichem bestehen. Sie verleiht der Schicht 1 eine verminderte Haftfähigkeit gegenüber den nachfolgend zu beschreibenden Schichten und gegenüber der Kleberschicht 9.

Auf die Trägerschicht 1 bzw. auf die Trennschicht 4 ist zunächst ein Kennzeichnungsaufdruck 7 aufgedruckt, der aus einzelnen Kennzeichnungsteilen 7a und dazwischen freibleibenden, nicht bedruckten Bereichen 7b besteht. Der Kennzeichnungsaufdruck 7 ergibt das gewünschte Kennzeichungsbild und besteht in diesem Beispiel aus einer Schicht thermochromer Farbe.

Über dem Kennzeichnungsaufdruck ist gemäß Fig. 2 auf die Trägerschicht 1 eine Farbschicht 13 aufgedruckt. Diese weist einzelne Farbelemente 13a auf, zwischen denen Unterbrechungen 13b frei bleiben. Die Trennschicht 4 läßt ringsum einen Randbereich der Trägerschicht 1 frei. In diesem Bereich ist die Farbschicht 13 mit einem ringsum durchgehenden Randbereich 13c ausgebildet, der somit unmittelbar auf die Trägerschicht 1 aufgedruckt ist. Da die Farbschicht 13 aus einem an benachbarten Schichten haftenden Material besteht, ist somit eine innige Verbindung zwischen der Farbschicht 13 und der Trägerschicht 1 gegeben. Wie aus Fig. 2 auch zu erkennen ist, muß der Kennzeichnungsaufdruck 7, der hier aus einer Schicht aus thermochromer Farbe besteht, nicht über die gesamte Fläche des Kennzeichnungsträgers gehen. Es können ganz gezielt besondere Flächenbereiche des Kennzeichnungsträgers ausgewählt werden, die mit einem Kennzeichnungsaufdruck 7, der eine thermochrome Farbschicht enthält, versehen werden. Damit kann in vorteilhafter Weise ein spezieller Bereich des Kennzeichnungsträgers für die gewünschte zerstörungsfreie Prüfung ausgewählt und reserviert werden.

Über die Farbschicht 13 ist auf die Trägerschicht 1 ein Raster 5 aufgedruckt, der Farbbereiche 5a und dazwischen freibleibende Unterbrechungen 5b aufweist. Der Raster 5 ist hier in einem zu der Farbschicht 13 komplementären Muster unterbrochen. Dies bedeutet, daß die Farbbereiche oder Farbelemente 5a des Rasters 5 den Unterbrechungen 13b der Farbschicht 13 entsprechen und diese abdecken, während umgekehrt die Unterbrechung 5b des Rasters 5 den Farbbereichen 13a der Farbschicht 13 entsprechen, so daß durch die komplementären Muster der Farbschicht 13 und des Rasters 5 insgesamt eine durchgehende Fläche gebildet ist. Die Farbschicht 13 und der Raster 5 können vorzugsweise den gleichen Farbton aufweisen, so daß sich von der Ansichtsseite her optisch das Bild einer einheitlichen geschlossenen farbigen Fläche mit dem geforderten Farbton ergibt. Dies trifft auch für die Anordnung des Kennzeichnungsaufdrucks 7 aus thermochromer Farbe zu, der unabhängig von den Farbschichten und Rastern versteckt oder nicht versteckt angebracht werden kann. Beispielsweise kann man vorteilhfterweise als versteckten Kennzeichnungsaufdruck 7 einen Barcode wählen, der von einem Barcode-Leser, der eine integrierte Heizung enthält, abgelesen werden kann, so daß der Kennzeichnungsträger ohne besonderen Aufwand gleichzeitig gelesen und auf Echtheit überprüft werden kann. Nach Entfernen der Heizung, wenn der Kennzeichnungsträger wieder abkühlt, "verschwindet" der Barcode wieder und ist für einen Betrachter scheinbar gar nicht vorhanden.

Wie in Fig. 3 gezeigt ist, können die Farbelemente 5a des Rasters 5 die Farbbereiche 13a der Farbschicht 13 geringfügig überlappen, so daß auf jeden Fall sichergestellt ist, daß sich optisch eine geschlossene farbige Fläche ergibt, ohne daß sich an den Grenzbereichen der Unterbrechungen 13b der Farbschicht und der Unterbrechungen 5b des Rasters 5 farbfreie Bereiche ergeben.

Die Rasterelemente 5a oder die Farbbereiche 13a können jeweils miteinander in Verbindung stehen und so geschlossene, mit Unterbrechungen 5b bzw. 13b versehene Flächen bilden. Jedes Rasterelement 5a oder jeder Farbbereich 13a kann aber auch von den benachbarten Rasterelementen 5a oder den Farbbereichen 13a vollständig getrennt sein, so daß dann die Unterbrechungen 5b um die Rasterelemente 5a herum bzw. die Unterbrechungen 13b um die Farbbereiche 13a herum miteinander in Verbindung stehen.

Die Rasterelemente 5a bestehen vorzugsweise aus einem wasserlöslichen Material, während die Elemente des Kennzeichungsaufdrucks 7a vorzugsweise aus einem nicht wasserlöslichen, dagegen aber in einfachen organischen Lösungsmitteln, wie benzinlöslichem Material und erfindungsgemäß zumindest teilweise aus thermochromer Farbe bestehen. Die Farbbereiche 13a der Farbschicht 13 bestehen vorzugsweise aus gegen einfache Lösungsmittel im wesentlichen beständigen Materialien oder aus einem Material, das gegen andere Lösungsmittel empfindlicher ist als der Raster 5. Durch diese unterschiedlichen Löslichkeiten wird die Fälschungssicherheit bzw. die Anfälligkeit gegen Zerstörungen bei Angriffen mit unterschiedlichen Lösungsmitteln verbessert. Hierbei kann vorzugsweise auch eine thermochrome Farbe zum Einsatz kommen, die lösungsmittelempfindlich ist.

Die abschließend aufgebrachte Kleberschicht 9 steht einerseits mit einzelnen Farbelementen 5a des Rasters 5 und andererseits mit einzelnen Farbelementen 13a der Farbschicht 13 in Verbindung und haftet an diesen. Dabei kann auch die Klebersschicht 9 mit Unterbrechungen 9b versehen sein, so daß nur einzelne Kleberbereiche oder Kleberpunkte 9a verbleiben.

Zusammenfassend ergibt sich also ein mehrschichtiger insgesamt unregelmäßig unterbrochener und ungleichmäßig haftender Aufbau mit unterschiedlichen Lösungsmittelempfindlichkeiten. Dieser Aufbau ist gegen Fälschungsversuche besonders empfindlich und nach dem Ablöseversuch nicht wiederherstellbar. Zusätzlich ist eine zerstörungsfreie unbemerkte Kontrollprüfung des Kennzeichnungsträgers möglich.

Die Kleberschicht deckt alle darunterliegenden Teile des Kennzeichnungsträgers ab. Vor dem Aufbringen auf eine Unterlage (Kennzeichenschild, Ausweis, Fensterscheibe eines Kraftfahrzeuges, Außen- oder Innenseite einer Maschine oder irgendeinen anderen Gegenstandes) ist die Kleberschicht 9 mit einer Schutzschicht 11, insbesondere mit einem Schutzpapier oder mit einer Schutz- und Transportfolie abgedeckt. Diese Schicht wird vor dem Aufkleben abgezogen, so daß der Kennzeichnungsträger mittels der Kleberschicht 9 auf der Unterlage befestigt werden kann. In der zeichnerischen Darstellung entspricht die Unterlage der vorher abgezogenen Schutzschicht 11, so daß mit dieser Bezugsziffer 11 auch die Unterlage gekennzeichnet ist.

Da der Randbereich der Trägerschicht 1 bzw. des Kennzeichnungsträgers frei von der Trennschicht 4 und von dem Kennzeichnungsaufdruck 7 und/oder dem Raster 5 ist, liegt dort die haftende Farbschicht 13 mit dem Randbereich 13c unmittelbar an der Trägerschicht 1 an. Die an der Rückseite der Farbschicht 13 befindliche Kleberschicht 9 hält dann über die Farbschicht 13 den Randbereich der Trägerschicht 1 besonders fest an der Unterlage.

Es kann auch in mindestens einer der Schichten des Gesamtaufbaus, insbesondere in der Trennschicht 4, in dem Kennzeichnungsaufdruck 7, in dem Raster 5 und/oder in der Farbschicht 13 ein elektronisch programmierbares und/oder ein elektronisch lesbares Element angebracht sein, beispielsweise in Form eines Chips oder eines Magneten. Der Begriff "elektronisch" umfaßt hierbei auch alle elektrischen und magnetischen Vorgänge. Solche Elemente können individuell mit bestimmten Markierungen oder Kennzeichnungen versehen werden, die durch geeignete Mittel erkennbar oder lesbar sind, und die auch mit geeigneten Mitteln wieder gelöscht oder verändert werden können.

Fig. 4 zeigt schematisch einen Ausschnitt einer vorteilhaften Ausgestaltung des erfindungsgemäßen Kennzeichnungsträgers. Die für die Darstellung gewählten Schichtdicken und Schichtflächenbereiche sind willkürlich und dienen der Vereinfachung. Die Darstellung ist nicht maßstabsgetreu, und auch die Schichtdickenverhältnisse untereinander sind zufällig gewählt. Es geht bei der vorliegenden Darstellung nur um qualitative Aspekte.

Im oberen Bereich der Darstellung ist die Trägerschicht 1 zu erkennen, die von zwei Schichten 15 und 19 benachbart ist, die aus einem Material eines mechanisch ablösbaren Haftklebers bestehen. Vorzugsweise wird hierfür Silikon gewählt. Der hier bruchstückhaft dargestellte Kennzeichnungsträger besteht als solcher nur aus den Schichten a bis h. Er ist nur zur Herstellung, anschließenden Lagerung und zum Handling auf die silikonisierte Trägerschicht 1 aufgedruckt. Stellt man sich die Trägerschicht 1 und auf diese bzw. deren benachbarte Schicht 19 aufgedruckte Kennzeichnungsträger, bestehend aus den Schichten a bis h vor, und rollt man die Trägerschicht 1 in der Art von Klebefilmrollen auf, so kommt die Schicht h beim Aufwickeln des Trägers 1 auf die dem Träger 1 benachbarte Silikonschicht 15. Beim Verarbeiten des Kennzeichnungsträgers von der Trägerschicht 1 wird der Kennzeichnungsträger mit seiner die Schicht 15 berührenden Klebstoffschicht h abgelöst. Zu diesem Zweck wird eine Silikonschicht 15 gewählt, deren Haftfähigkeit geringer ist als die Haftfähigkeit der Silikonschicht 19. Würden sich die Hafteigenschaften der Schichten 15 und 19 nicht unterscheiden, so wäre ein eindeutiges Ablösen der Klebstoffschicht h von der Silikonschicht 15 nicht gewährleistet. Es könnte sich beim Aufbringen des Kennzeichnungsträgers auf eine Unterlage zufälligerweise auch die Silikonschicht 19 von der Klarlackschicht a lösen. Wird der Kennzeichnungsträger in einer anderen als der beschriebenen Rollenform in Einzelexemplaren hergestellt, so entfällt die Silikonschicht 15. Stattdessen wird auf die Klebstoffschicht h ein silikonisiertes Schutzpapier etwa in der Art einer Silikonschicht 15 auflaminiert.

Zu den einzelnen Schichten des Kennzeichnungsträgers: Die Klarlackschicht a besteht aus einer unter UV-Licht oder konventionell trocknenden Druckfarbe und schützt den Kennzeichnungsträger, nachdem er am Einsatzort befestigt ist, gegen äußere Einflüsse. Zum Befestigen des Kennzeichnungsträgers wird dieser, d.h. seine Schichten a bis h als Verbund von der Silikonschicht 19 gelöst und mit seiner Klebstoffschicht h auf eine Unterlage (z. B. Dokumente, Schilder etc.) geklebt. Die Klarlackschicht a deckt eine darunterliegende Schicht b einer auf Licht, insbesondere UV-Licht, reagierenden Farbe ab. Auf diese wiederum wird eine Trennlackschicht c aufgedruckt, die eine Haftsperrschicht darstellt, die, wenn man die Bewegungsrichtung der Druckeinrichtung als Vertikale annimmt, ein vertikales Aneinanderhaften der Schichten lokal verhindert. Ein Abheben der oberen Schicht, hier der Schicht b einer auf Licht reagierenden Farbe, führt nicht gleichzeitig zum Abheben der unteren Schicht, hier einer auf die Trennlackschicht c aufgedruckten weiteren Klarlackschicht d. Diese Trennlackschicht c kann zusätzlich noch mit UV-Licht-reflektierenden Farbpigmenten versetzt sein. In diesem Fall ist auch diese Schicht eine Erkennungsschicht, die der Fälschungserschwerung dient. Ein Vorhandensein ist durch Aufbringen von UV-Licht prüfbar. Der in Fig. 4 dargestellte schraffierte Bereich der Trennlackschicht c ist der Bereich, in dem sich die Schichten a und b von der Schicht d trennen können, sofern sie mechanisch von diesen abgehoben werden. Nur im in Schicht c nicht schraffierten Bereich kann die Schicht b auf der Schicht d haften.

Die bereits erwähnte Klarlackschicht d ist eine Sperrschicht, die als Schutzschicht für weitere Schichten dient. Beispielsweise können die Schichten a, b, c und d Lösungsmittel enthalten, die in anderen Ebenen befindliche Schichten angreifen könnten und umgekehrt. Im Anschluß an die Klarlackschicht d wird eine Farbschicht e aufgedruckt. Im in Fig. 4 dargestellten Ausführungsbeispiel wird durch teilweise schraffierte und teilweise nicht schraffierte Bereiche der Schicht e versinnbildlicht, daß die Farbschicht nur Bereichsweise auf die Klarlackschicht d gedruckt wird. Dies geschieht zwangsläufig dann, wenn beispielsweise ein Text oder z. B. einfach nur ein Schachbrettmuster gedruckt wird. Die Höhe der Schicht d entspricht also der Höhe der Druckfarbe des gedruckten Textes. Die beim Ausführungsbeispiel nach Fig. 4 dargestellte Version eines Kennzeichnungsträgers enthält eine weitere Farbschicht f, die hier als zusätzliche, nur bereichsweise gedruckte Schicht dargestellt ist, jedoch für einen Kennzeichnungsträger nicht unbedingt benötigt wird. Die Konfiguration der Farbschicht f kann wie die der Farbschicht e ein Schachbrettmuster, einen Text oder auch irgendein anderes Raster darstellen. Auf die eben erwähnte Farbschicht f wird bereichsweise eine thermochrome Farbe aufgedruckt, die durch die Schicht g dargestellt sein soll. Die Funktion der thermochromen Farbschicht ist im Verlauf dieser Beschreibung bereits mehrfach erklärt wurden. Deshalb wird hier nicht noch einmal darauf eingegangen.

Auf die thermochrome Farbschicht g wird als letzte Schicht eine Klebstoffschicht h aufgedruckt, die Pigmentkapseln einer thermochromen Farbe enthält. In Fig. 4 ist die gleichmäßige Verteilung der in der Klebstoffschicht h angeordneten Pigmentkapseln durch Pünktchen dargestellt. Ein wahlweises Mischverhältnis von Pigmentkapseln einer thermochromen Farbe und Klebstoff ist zu den bisher ausführlich erläuterten Schutzmechanismen ein weiteres Sicherungsmerkmal für den erfindungsgemäßen Kennzeichnungsträger.

## Patentansprüche

1. Kennzeichnungsträger, der mit Hilfe einer Klebstoffschicht (h) auf eine Unterlage aufklebbar ist, der eine Trägerschicht (1), auf die ein Kennzeichnungsaufdruck aufgedruckt ist, sowie eine Klarlackschicht (a) und eine Farbschicht (e) aufweist,
**gekennzeichnet durch**
eine, eine thermochrome Farbe enthaltende Schicht (g),
wobei die gleichmäßig aufgetragene Klebstoffschicht (h) Pigmentkapseln einer thermochromen Farbe enthält, und wobei die Trägerschicht (1) über der Klarlackschicht (a) oder unter der Klebstoffschicht (h) angeordnet ist.

2. Kennzeichnungsträger nach Anspruch 1, **dadurch gekennzeichnet,** daß der Umschlagspunkt der thermochromen Farbe auf einen vorbestimmten Temperaturbereich festglegt ist.

3. Kennzeichnungsträger nach Anspruch 2, **dadurch gekennzeichnet,** daß der Umschlagspunkt der thermochromen Farbe der zweiten Schicht in einem vom erstgenannten Temperaturbereich verschiedenen Temperaturbereich liegt.

4. Kennzeichnungsträger nach Anspruch 2 oder 3, **dadurch gekennzeichnet,** daß der Umschlagspunkt der thermochromen Farbe der ersten Schicht bei einer Temperatur von etwa 35 °C liegt, bei der die Farbe durchsichtig wird.

5. Kennzeichnungsträger nach Anspruch 4, **dadurch gekennzeichnet,** daß der Umschlagspunkt der thermochromen Farbe der zweiten Schicht bei einer Temperatur von etwa 10 °C liegt, bei der die Farbe durchsichtig wird.

6. Kennzeichnungsträger nach einem der vorhergehenden Ansprüche, **dadurch gekennzeichnet,** daß die thermochrome Farbe gegen einfache Lösungsmittel empfindlich ist.

7. Kennzeichnungsträger nach einem der vorhergehenden Ansprüche, **dadurch gekennzeichnet,** daß der Elastizitätsgrad der Trägerschicht (1) einstellbar ist.

8. Kennzeichnungsträger nach einem der vorhergehenden Ansprüche, **dadurch gekennzeichnet,** daß er übereinanderliegende Schichten in folgender Reihenfolge aufweist:
eine Klarlackschicht (a)
eine Schicht einer auf Licht reagierenden Farbe (b)
eine Trennlackschicht (c)
eine weitere Klarlackschicht (d)
eine Farbschicht (e)
eine weitere Farbschicht (f)
eine bereichsweise aufgetragene Schicht einer thermochromen Farbe (g)
eine gleichmäßig aufgetragene, Pigmentkapseln einer thermochromen Farbe enthaltende, Klebstoffschicht (h)
eine über der Klarlackschicht (a) oder unter der Klebstoffschicht (h) angeordnete Trägerschicht (1).

9. Kennzeichnungsträger nach Anspruch 8, **dadurch gekennzeichnet,** daß die gleichmäßig aufgetragene Klebstoffschicht (h) eine Dispersionshaftklebstoffschicht ist.

10. Kennzeichnungsträger nach Anspruch 8 oder 9, **dadurch gekennzeichnet,** daß die Schicht einer auf Licht reagierenden Farbe (b) nur bereichsweise aufgetragen ist.

11. Kennzeichnungsträger nach Anspruch 8, 9 oder 10, **dadurch gekennzeichnet,** daß die Trägerschicht (1) ein- oder beidseitig mit Silikon (15, 19) beschichtet ist.

12. Verfahren zur Herstellung eines Kennzeichnungsträgers nach einem der Ansprüche 1 bis 11, **dadurch gekennzeichnet,** daß die Schichten nacheinander, insbesondere im Siebdruck, gedruckt werden.

13. Verfahren zur Herstellung eines Kennzeichnungsträgers nach einem der Ansprüche 1 bis 7, **dadurch gekennzeichnet,** daß die Schichten nacheinander in folgender Reihenfolge gedruckt werden:
- eine Klarlackschicht (a)
- eine Farbschicht (e)
- eine gleichmäßig aufgetragene, Pigmentkapseln einer thermochromen Farbe enthaltende, Klebstoffschicht (h).

14. Verfahren zur Herstellung eines Kennzeichnungsträgers nach einem der Ansprüche 8 bis 11, **dadurch gekennzeichnet**, daß die Schichten nacheinander in folgender Reihenfolge gedruckt werden:
- eine Klarlackschicht (a)
- eine Schicht einer auf Licht reagierenden Farbe (b)
- eine Trennlackschicht (c)
- eine weitere Klarlackschicht (d)
- eine weitere Farbschicht (f)
- eine Farbschicht (e)
- eine bereichsweise aufgetragene Schicht einer thermochromen Farbe (g)
- eine gleichmäßig aufgetragene, Pigmentkapseln einer thermochromen Farbe enthaltende, Klebstoffschicht (h).

## Claims

1. A marking carrier adherable with the aid of an adhesive film (h) to a base, comprising a substrate (1) on which a marking is printed, as well as a clear lacquer film (a) and an inking film (e)
**characterized by**
a thermochromic inking film (g),
said evenly applied adhesive film (h) containing pigment capsules of a thermochromic ink and said substrate (1) being arranged above said clear lacquer film (a) or below said adhesive film (h).

2. The marking carrier as set forth in claim 1, characterized in that the color-change temperature of said thermochromic ink is defined in a predetermined temperature range.

3. The marking carrier as set forth in claim 2, characterized in that said color-change temperature of said thermochromic ink of said second film is in a temperature range different to the first-mentioned temperature range.

4. The marking carrier as set forth in claim 2 or 3, characterized in that said color-change temperature of said thermochromic ink of said first film is approximately 35°C at which said ink becomes transparent.

5. The marking carrier as set forth in claim 4, characterized in that said color-change temperature of said of said thermochromic ink of said second film is approximately 10°C at which said ink becomes transparent.

6. The marking carrier as set forth in any of the preceding claims, characterized in that said thermochromic ink is sensitive to simple solvents.

7. The marking carrier as set forth in any of the preceding claims, characterized in that the degree of elasticity of said substrate (1) is variable.

8. The marking carrier as set forth in any of the preceding claims, characterized by it comprising the following film sequence:
a clear lacquer film (a)
a light-sensitized inking film (b)
a parting lacquer film (c)
a further clear lacquer film (d)
an inking film (e)
a further inking film (f)
a thermochromic inking film applied portionwise (g)
an evenly applied adhesive film (h) containing pigment capsules of a thermochromic ink,
an adhesive film (h)
a substrate (1) arranged above said clear lacquer film (a) or under said adhesive film (h).

9. The marking carrier as set forth in claim 8, characterized in that said evenly applied adhesive film (h) is a dispersion adhesive film.

10. The marking carrier as set forth in claim 8 or 9, characterized in that said light-sensitized inking film (b) is applied only portionwise.

11. The marking carrier as set forth in any of the claims 8, 9 or 10, characterized in that said substrate (1) is coated on one or both sides with silicone (15, 19).

12. A method of producing a marking carrier as set forth in any of the preceding claims 1 to 11, characterized in that said films are printed, more particularly, screen printed one after the other.

13. A method of producing a marking carrier as set forth in any of the preceding claims 1 to 7, characterized in that said films are printed one after the other in the following sequence:
- a clear lacquer film (a)
- an inking film (e)
- an evenly applied adhesive film (h) containing pigment capsules of a thermochromic ink.

14. A method of producing a marking carrier as set forth in any of the preceding claims 8 to 11, characterized in that said films are printed more particularly in the following sequence:
- a clear lacquer film (a)
- a light-sensitized inking film (b)
- a parting lacquer film (c)
- a further clear lacquer film (d)
- a further inking film (f)
- an inking film (e)
- a thermochromic inking film applied portionwise (g)
- an evenly applied adhesive film (h) containing pigment capsules of a thermochromic ink.

## Revendications

1. Support d'immatriculation qui peut être collé au moyen d'une couche de colle (h) sur une base qui présente une couche support (1) sur laquelle une impression d'immatriculation est imprimée, ainsi qu'une couche de laque transparente (a) et une couche de couleur (e),
**caractérisé par**
une couche (g) contenant une couleur thermochrome,
la couche de colle (h) appliquée régulièrement comportant des capsules de pigments d'une couleur thermochrome, et la couche support (1) est disposée au-dessus de la couche de laque transparente (a) ou au-dessous de la couche de colle (h).

2. Support d'immatriculation selon la revendication 1, **caractérisé en ce que** le point final de la réaction de la couleur thermochrome est établi dans une plage de température prédéterminée.

3. Support d'immatriculation selon la revendication 2, **caractérisé en ce que** le point final de la réaction de la couleur thermochrome de la seconde couche se trouve dans une plage de température différente de la plage de température cité en premier.

4. Support d'immatriculation selon les revendications 2 ou 3, **caractérisé en ce que** le point final de la réaction de la couleur thermochrome de la première couche se situe à une température d'environ 35°C à laquelle la couleur devient transparente.

5. Support d'immatriculation selon la revendication 4, **caractérisé en ce que** le point final de la réaction de la couleur thermochrome de la deuxième couche se situe à une température d'environ 10°C à laquelle la couleur devient transparente.

6. Support d'immatriculation selon l'une quelconque des revendications précédentes, **caractérisé en ce que** la couleur thermochrome est sensible à des solvants simples.

7. Support d'immatriculation selon l'une quelconque des revendications précédentes, **caractérisé en ce que** le degré d'élasticité de la couche support (1) est réglable.

8. Support d'immatriculation selon l'une quelconque des revendications précédentes, **caractérisé en ce qu'**il présente des couches superposées dans l'ordre suivant :
une couche de laque transparente (a),
une couche d'une couleur réagissant à la lumière (b),
une couche de laque de séparation (c),
une couche de laque transparente supplémentaire (d),
une couche de couleur (e),
une couche de couleur supplémentaire (f),
une couche appliquée par zones d'une couleur thermochrome (g),
une couche de colle (h) appliquée régulièrement et contenant des capsules de pigments d'une couleur thermochrome,
une couche support (1) disposée au-dessus de la couche de laque transparente (a) ou au-dessous de la couche de couleur (h).

9. Support d'immatriculation selon la revendication 8, **caractérisé en ce que** la couche de colle (h) régulièrement appliquée est une couche de colle de dispersion auto-adhésive.

10. Support d'immatriculation selon les revendications 8 ou 9, **caractérisé en ce que** la couche d'une couleur (b) réagissant à la lumière n'est appliquée que par zones.

11. Support d'immatriculation selon les revendications 8, 9 ou 10, **caractérisé en ce que** la couche support (1) est enduite de silicone (15, 19) d'un côté ou des deux.

12. Procédé pour la réalisation d'un support d'immatriculation selon l'une quelconque des revendications 1 à 11, **caractérisé en ce que** les couches sont imprimées l'une après l'autre notamment par sérigraphie.

13. Procédé pour la réalisation d'un support d'immatriculation selon l'une quelconque des revendications 1 à 7, **caractérisé en ce que** les couches sont imprimées l'une après l'autre dans l'ordre suivant :
une couche de laque transparente (a),
une couche de couleur (e),
une couche de colle (h) appliquée régulièrement et contenant des capsules de pigments d'une couleur thermochrome.

14. Procédé pour la réalisation d'un support d'immatriculation selon l'une quelconque des revendications 8 à 11, **caractérisé en ce que** les couches sont imprimées l'une après l'autre dans l'ordre suivant :
une couche de laque transpartente (a),
une couche d'une couleur réagissant à la lumière (b),
une couche de laque de séparation (c),
une couche de laque transparente supplémentaire (d),
une couche de couleur supplémentaire (f),
une couche de couleur (e),
une couche appliquée par zones d'une couleur thermochrome (g),
une couche de colle (h) appliquée régulièrement et contenant des capsules de pigments d'une couleur thermochrome.
